# FASCICULE DE BREVET EUROPEEN

(11) **EP 3 078 996 B1**
(45) Date de publication et mention de la délivrance du brevet: **18.09.2019**
(21) Numéro de dépôt: 16164200.4
(22) Date de dépôt: 07.04.2016
(51) Int. Cl.: G02B 6/134, G02B 6/12

(54) **PROCÉDÉ D'AJUSTEMENT DES PROPRIÉTÉS D'UN CIRCUIT PHOTONIQUE PAR IMPLANTATION IONIQUE POST-FABRICATION, GUIDE D'ONDES ET CIRCUIT PHOTONIQUE AINSI AJUSTÉS**
ANPASSUNGSVERFAHREN DER EIGENSCHAFTEN EINES PHOTONENSCHALTKREISES DURCH IONENIMPLANTATION NACH DER HERSTELLUNG, NACH DIESEM VERFAHREN ANGEPASSTER WELLENLEITER UND PHOTONENSCHALTKREIS
METHOD FOR ADJUSTING THE PROPERTIES OF A PHOTONIC CIRCUIT BY ION IMPLANTATION AFTER MANUFACTURING, WAVEGUIDE AND PHOTONIC CIRCUIT THUS ADJUSTED

(30) Priorité: 08.04.2015 FR 1553024
(43) Date de publication de la demande: 12.10.2016
(73) Titulaire: Commissariat à l'Énergie Atomique et aux Énergies Alternatives, 75015 Paris (FR)
(72) Inventeur: HASSAN, Karim, 38500 VOIRON (FR); SCIANCALEPORE, Corrado, 69002 Lyon (FR); BEN BAKIR, Badhise, 38590 BREZINS (FR); MENEZO, Sylvie, 38500 VOIRON (FR)
(74) Mandataire: Brevalex

(56) Documents cités:
- EP-A1- 1 150 403
- US-A- 4 938 836
- US-A- 5 708 739
- US-A1- 2003 118 271

## Description

### DOMAINE TECHNIQUE

Le domaine de l'invention est celui de la photonique et de l'optoélectronique sur silicium micro-nano-structuré. L'invention concerne d'une manière générale les guides d'ondes pour circuits photoniques et concerne plus particulièrement une technique permettant de pallier aux incertitudes de fabrication de tels circuits.

### ÉTAT DE LA TECHNIQUE ANTÉRIEURE

Les différents composants photoniques, actifs et passifs, forment une bibliothèque de composants complète qui permet de réaliser l'ensemble des fonctions nécessaires au traitement de l'information par la lumière sur puce, de l'émission à la réception, en passant par la transmission faible perte, le multiplexage en longueur d'onde, et la manipulation haute fréquence de signaux. On retrouve dans cette bibliothèques les lasers, les composants RF (modulateurs, photodiodes), les composants passifs (guides, (de)multiplexeurs, filtres résonants, coupleurs), et les réseaux de (dé)couplage.

Néanmoins, ces composants souffrent pour la plupart d'une faiblesse provenant du matériau central et commun à tous ces composants, le silicium, dont l'indice de réfraction est naturellement sensible aux variations de température. Cette sensibilité intrinsèque nécessite une attention particulière lors de la conception puisqu'elle peut engendrer des erreurs de phase dans les circuits, synonymes d'une baisse drastique des performances, voire même du disfonctionnement d'une ou plusieurs pièces du circuit.

Cette sensibilité néfaste au premier abord peut être habilement contrôlée par des éléments chauffants ou des contacts électriques placés à proximité des composants. En particulier, une gestion fine et dynamique permet d'effectuer des ajustements spatio-fréquentiels indispensables pour pallier les incertitudes de fabrication et ainsi recaler les signaux optiques dans les normes internationales (télécom/datacom). Ces chaufferettes/électrodes sont positionnées en 'Back-End Of Line' (BEOL), i.e. fin de processus de fabrication, pour la gestion des problèmes thermiques et les ajustements spatio-fréquentiels entre briques de transmission et réception, dont le multiplexage des porteuses optiques.

Ce contrôle thermique actif s'effectue toutefois au prix d'une consommation énergétique importante et éventuellement de pertes optiques supplémentaires.

Pour s'affranchir des inconvénients d'un tel contrôle actif énergivore, il a été proposé dans la demande internationale WO 2013/119981 A1 d'ajouter un matériau supplémentaire à l'interface entre le guide d'ondes et sa couche d'encapsulation afin de disposer d'un paramètre d'ajustement en post-fabrication. Une insolation UV de ce nouveau matériau d'interface vient en effet modifier l'indice de réfraction à l'intérieur du guide, permettant ainsi de réajuster les propriétés spectrales d'un circuit photonique intégrant un tel guide.

Néanmoins, cette solution vient complexifier la fabrication des circuits photoniques puisque l'intégration de ce matériau d'interface au circuit doit être réalisée au cours de la fabrication de ce dernier.

On connait du document US 2001/02118271 A1 une technique de réajustement post-fabrication des propriétés d'un coupleur optique qui réalise une modification de l'indice de réfraction d'une portion de guide d'onde au moyen d'une implantation ionique à travers une encapsulation.

### EXPOSÉ DE L'INVENTION

L'invention a pour objectif de proposer une technique permettant de réajuster, après fabrication et à échelle industrielle, les propriétés spectrales de composants photoniques sur silicium, cela sans ajouter de matériau à l'interface guide/encapsulation, mais en venant simplement mettre en oeuvre des étapes de post-fabrication en BEOL facilement intégrables dans une chaine de production.

Elle propose pour ce faire un procédé d'ajustement des propriétés d'un circuit photonique pour les recaler avec des propriétés attendues, ledit procédé étant défini par la revendication 1.

Certains aspects préférés mais non limitatifs de ce procédé sont définis dans les revendications dépendantes 2 et 3.

L'invention s'étend également à un guide d'ondes tel que défini par la revendication 4.

Certains aspects préférés mais non limitatifs de ce guide d'ondes sont définis dans les revendications dépendantes 5 à 11.

L'invention s'étend également à un circuit photonique intégrant un tel guide d'ondes.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 est un schéma d'un interféromètre de Mach-Zehnder comprenant un guide d'ondes selon le premier aspect de l'invention ;
- les figures 2a et 2b sont des vues en coupe des guides d'ondes de chacun des bras de l'interféromètre de la figure 1, le guide d'ondes de la figure 2b étant conforme à l'invention ;
- la figure 3 représente la variation d'indice effectif du mode optique TE00 en fonction de la profondeur d'implantation dans la région de propagation de lumière d'un guide d'ondes conforme à l'invention ;
- la figure 4 est un schéma d'un réseau sélectif planaire comprenant une pluralité de guide d'ondes selon l'invention ;
- la figure 5 représente différentes géométries d'implantation pouvant être mises en oeuvre dans le cadre de l'invention ;
- la figure 6 représente la variation d'indice effectif du mode optique TE00 en fonction de la profondeur d'implantation pour deux géométries d'implantation ;
- la figure 7 illustre différentes étapes, réalisées en post-fabrication, de formation d'un guide d'ondes ;
- la figure 8 représente un guide d'ondes conforme à un mode de réalisation possible de l'invention selon lequel il est doté d'une électrode métallique formant chaufferette.

### EXPOSÉ DÉTAILLÉ DE MODES DE RÉALISATION PARTICULIERS

L'invention vise à pallier les dérives/incertitudes de fabrication d'un circuit photonique afin que celui-ci présente, ou tout du moins se rapproche, les caractéristiques spectrales escomptées (par exemple parce qu'il s'agit de caractéristiques normalisées).

Elle propose d'une manière générale de réajuster de manière contrôlée les caractéristiques spectrales d'un circuit photonique en post-fabrication en venant procéder à une ou plusieurs implantations ioniques localisées dans des zones d'intérêt du circuit.

Une telle implantation engendre une augmentation de l'indice de réfraction du matériau implanté. Cette variation d'indice de réfraction peut ainsi être contrôlée de manière à réaliser un ajustement de phase dans le circuit photonique. Cet ajustement est obtenu de manière passive par modification des propriétés des matériaux constitutifs du circuit.

L'invention porte plus précisément sur un procédé d'ajustement des propriétés d'un circuit photonique pour les recaler avec des propriétés attendues. Le circuit photonique comporte un guide d'ondes qui comprend une région, généralement dénommée coeur, de propagation de la lumière dans laquelle la lumière est fortement confinée. Le procédé comporte une étape de modification de l'indice de réfraction d'au moins une zone de ladite région dans laquelle la lumière reste confinée, ladite étape étant mise en oeuvre au moyen d'une implantation ionique dans l'au moins une zone.

Les espèces ioniques implantées dans l'au moins une zone de la région de propagation de la lumière peuvent être des espèces ioniques du groupe IV, telles que des ions de carbone, de germanium, d'étain ou de plomb, ou encore des espèces ioniques de gaz noble, telles que des ions de néon, d'argon, de krypton ou de xénon.

Ce procédé d'ajustement post-fabrication peut être mis en oeuvre sur l'ensemble de la circuiterie photonique, indépendamment de la forme du composant ou du type de guides qui le constituent. Le guide d'ondes peut ainsi être du type en arête (*rib*)*,* du type en bande (*strip*) ou encore du type en plaque (*slab*)*.*

L'invention s'étend également à un guide d'ondes pour circuit photonique, comprenant une région de propagation de la lumière, caractérisé en ce que ladite région présente au moins une zone à indice de réfraction modifié par implantation ionique dans laquelle la lumière reste confinée. La zone implantée permet ainsi le réajustement des propriétés du circuit. L'invention porte ainsi également sur le circuit aux propriétés ainsi ajustées.

Le procédé d'ajustement post-fabrication débute typiquement, avant l'étape de modification de l'indice de réfraction de l'au moins une zone, par une étape de détection de propriétés spectrales du circuit photonique et par une étape de détermination de conditions d'implantation en fonction de l'écart entre les propriétés spectrales détectées et des propriétés spectrales attendues.

La détection des propriétés spectrales du circuit photonique s'effectue par exemple au moyen d'une mesure fibre-à-fibre du spectre de transmission du circuit photonique. Et par conditions d'implantation, on entend une définition de « où ? » et « comment ?» implanter, à savoir une cartographie de la ou des zones implantées (localisation et géométrie : longueur dans la direction de propagation de la lumière et largeur dans la direction transversale à la direction de propagation de la lumière), et un réglage des paramètres d'implantation, à savoir dose et énergie.

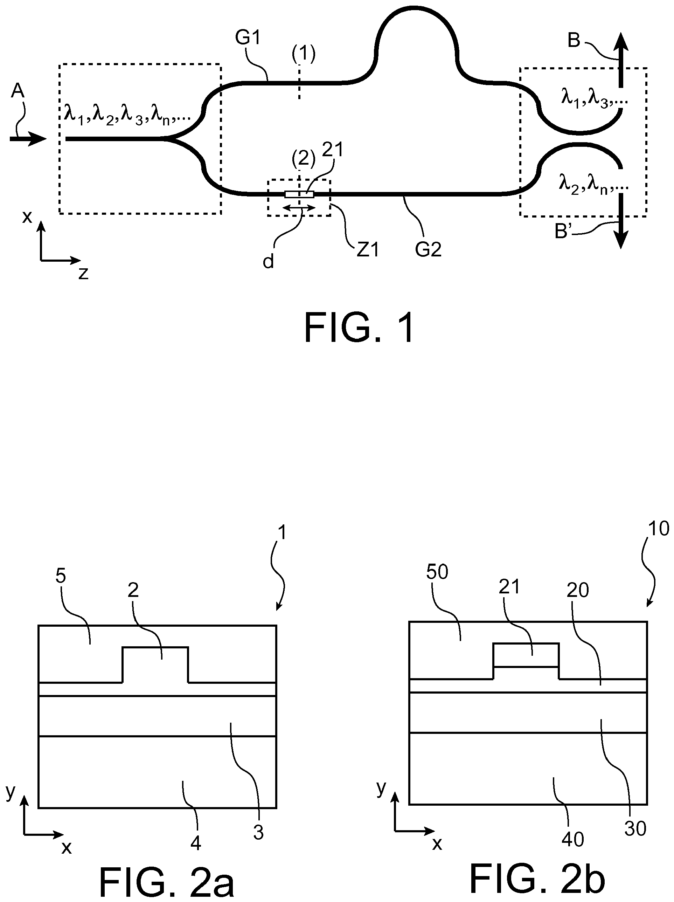

A titre d'exemple illustratif de l'invention, on a représenté sur la figure 1 un schéma d'un interféromètre de Mach-Zehnder pouvant être utilisé en cascade avec d'autres interféromètres en tant que (dé)multiplexeur et dont les propriétés ont été ajustées post-fabrication par la mise en oeuvre du procédé selon l'invention.

Sur cette figure 1, la flèche A représente le flux optique multiplexé fourni sur le port d'entrée de l'interféromètre, et les flèches B et B' représentent les différentes longueurs d'ondes séparées par l'interféromètre et disponibles sur ces ports de sortie. L'interféromètre dispose de deux bras déphasés l'un par rapport à l'autre prenant la forme d'un premier et d'un deuxième guide d'ondes G1, G2 de longueur différentes.

Les figures 2a et 2b représentent respectivement des vues en coupe, transversalement à la direction de propagation de la lumière, du premier et du deuxième guides d'ondes G1, G2 au niveau de zones de ces guides identifiées par les références (1) et (2) sur la figure 2.

Le guide d'ondes 1 de la figure 2a est un guide d'ondes conventionnel à indice de réfraction non modifié par des opérations post-fabrication. Il comprend une région de propagation de la lumière 2 en silicium (ici de type en arête) formé par gravure de la couche superficielle d'un substrat silicium sur isolant. La région 2 repose ainsi sur une couche d'oxyde enterrée 3 interposée entre la région 2 et un substrat de silicium 4. Une couche d'encapsulation 5 vient recouvrir la région 2.

Le guide d'ondes 10 de la figure 2b est conforme à l'invention en ce qu'il a subi une implantation localisée d'ions dans sa région de propagation de la lumière 20 afin de modifier son indice de réfraction dans une zone 21. Cette modification localisée de l'indice de réfraction ne vient pas altérer la fonction de guidage de la lumière, la lumière restant effectivement confinée dans le guide d'ondes, y compris dans la zone implantée, pour les longueurs d'ondes de fonctionnement du circuit photonique.

La région de propagation de la lumière 20 repose également sur une couche d'oxyde enterrée 30 interposée entre la région 20 et un substrat de silicium 40, une couche d'encapsulation 50 venant recouvrir la région 20. Comme représenté sur la figure 2b, la zone implantée 21 peut être une portion supérieure de la région 20. L'épaisseur de la zone implantée est alors inférieure ou égale à la hauteur totale de la région 20. Par ailleurs comme représenté sur la figure 1, la région implantée s'étend sur une distance (longueur) déterminée d dans la direction de propagation de la lumière. Cette distance est typiquement supérieure à la moitié de la longueur d'ondes de la lumière, et inférieure à quelques dizaines de micromètres.

Lorsque le guide d'ondes est du type en bande, la largeur de la zone implantée 21 correspond typiquement à la largeur de la bande. Lorsque le guide d'ondes est du type en arête, la largeur de la zone implantée peut coïncider ou non avec la largeur de l'arête. En particulier, comme cela sera décrit plus en détail par la suite, la largeur de la zone implantée peut être supérieure à la largeur de l'arête, tout du moins dans une partie de la zone implantée.

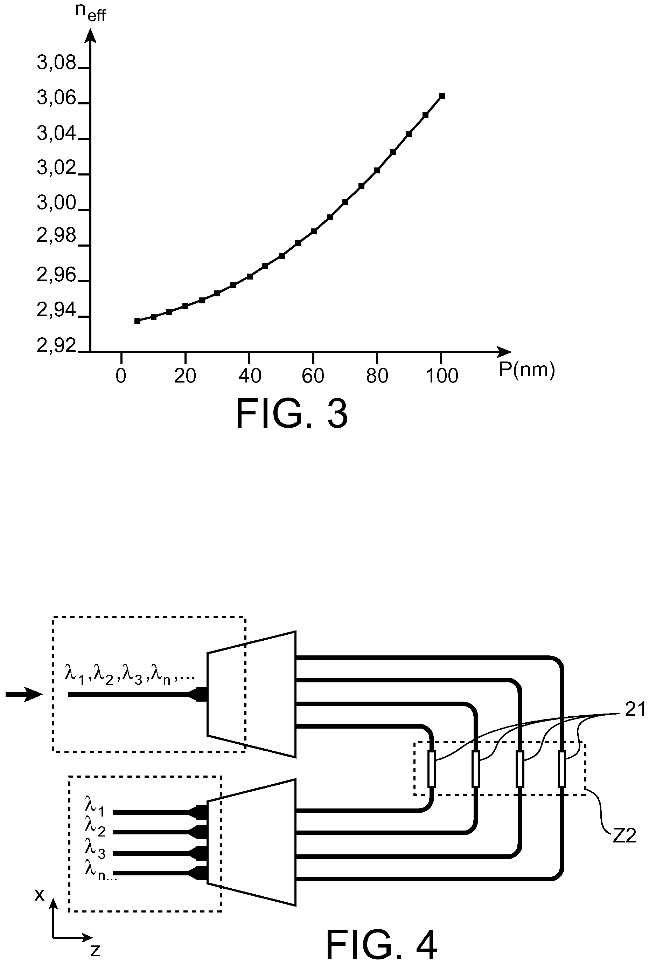

On a représenté sur la figure 3 la variation d'indice effectif n_{eff} du mode optique TE00 en fonction de la profondeur d'implantation P dans une zone de la région de propagation de la lumière d'un guide d'ondes en arête conforme à l'invention. Cette variation a été simulée avec un pas de 5nm pour une profondeur d'implantation d'ions germanium variant de 5 à 100 nm et à une longueur d'ondes de la lumière de 1,31 µm. La dose implantée est de 10¹⁵ ions/cm². A titre d'exemples, une énergie d'implantation de 30 keV conduit à une profondeur d'implantation de 50 nm, tandis qu'une énergie d'implantation de 70 keV conduit à une profondeur d'implantation de 100 nm. Le guide d'ondes présente une hauteur de 300 nm, une profondeur de gravure de 150 nm, et une largeur de 400 nm. Il est encapsulé par une couche de SiO₂.

On constate de la figure 3 qu'une variation très importante d'indice effectif de 0,1 est obtenue avec une profondeur d'implantation raisonnable, inférieure à 100nm, et une faible dose implantée typiquement comprise entre 10¹⁴ et 10¹⁵ ions/cm². Une telle variation d'indice effectif pourrait être atteinte au moyen d'une élévation de température de plusieurs centaines de degrés, ce qui signifie que la zone implantée pour réaliser les réajustements spatio-fréquentiels est très courte en comparaison de la taille d'un élément chauffant équivalent. A titre d'exemple, la longueur de la zone implantée nécessaire pour générer un déphasage de π sur le bras d'un interféromètre de Mach-Zehnder s'établit, pour la longueur d'onde de 1,31 µm, à 6,55 µm.

Les pertes à la propagation liées aux défauts créés par ce type d'implantation se révèlent relativement faibles, si bien que pour de telles longueurs d'implantations, elles peuvent pratiquement être négligées.

Il est cependant possible de réduire encore plus l'impact de ces réajustements sur les pertes à la propagation en venant micro-nano-structurer les implantations d'ions. En effet, en plus des pertes associées aux défauts créés dans le silicium, il faut compter sur les pertes modales associées aux variations localisées d'indice.

Pour ce faire, l'au moins une zone implantée peut présenter, dans la direction de propagation de la lumière, une section de transition d'entrée dont la taille augmente progressivement, une section centrale de taille constante, et une section de transition de sortie dont la taille diminue progressivement.

Dans un mode de réalisation privilégié, les différentes sections peuvent être réalisées avec les mêmes conditions d'implantation (dose/énergie) de manière à ce que l'on rencontre le même profil de concentration en espèces implantées en profondeur dans la zone implantée sur toute la longueur de la zone implantée. Les sections peuvent alors être formées au cours d'une même implantation, la différence de géométrie n'étant due qu'à la forme d'un masque à l'implantation délimitant chacune des sections. Alternativement, il est possible de procéder à des implantations multiples en faisant varier les conditions d'implantation, de manière à jouer sur la profondeur d'implantation et/ou sur le profil de concentration en espèces implantées au sein de la zone implantée.

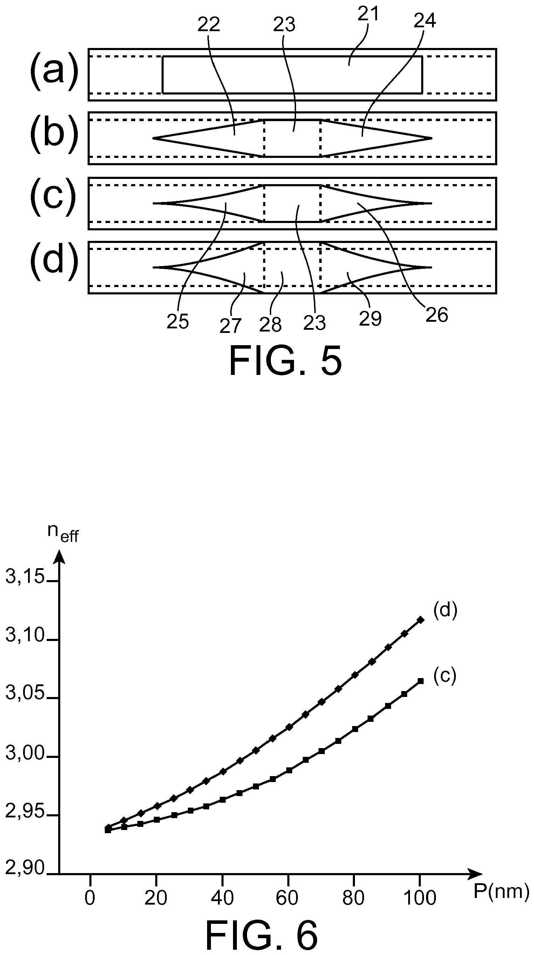

La figure 5 représente à cet égard différentes géométries d'implantation pouvant être obtenue par la mise en oeuvre du mode de réalisation privilégié mentionné ci-dessus.

Sur le schéma référencé (a), la zone implantée 21 ne présente pas de sections de transition : elle présente une seule géométrie le long de sa longueur en s'étendant sur toute la largeur de l'arête ou de la bande dans le cas d'un guide de type en arête ou en bande, ou sur une distance prédéterminée transversalement à la direction de propagation de la lumière dans le cas d'un guide de type en plaque.

En revanche, sur les schémas référencés (b), (c) et (d), la zone implantée présente des sections de transitions qui peuvent être développées à partir de modèles analytiques ou numériques.

Sur les schémas référencés (b) et (c), la section de transition d'entrée 22, 25 et la section de transition de sortie 24, 26 présentent une largeur, transversalement à la direction de propagation de la lumière, qui varie de manière linéaire, respectivement de manière dite adiabatique en ce sens que la variation d'indice n'engendre pas de pertes, dans la direction de propagation de la lumière. La section centrale 23 s'étend sur toute la largeur de l'arête ou de la bande dans le cas d'un guide de type en arête ou en bande, ou sur une distance prédéterminée transversalement à la direction de propagation de la lumière dans le cas d'un guide de type en plaque.

Avec une transition linéaire de 2 µm en entrée/sortie, une transmission de 99.2% du mode fondamental est observée à travers la région implantée, contre 92% dans le cas sans transition du schéma référencé (a).

Sur le schéma référencé (d), les sections de transition d'entrée et de sortie 27, 29 présentent une largeur qui varie progressivement dans la direction de propagation vers, respectivement depuis, la section centrale 28 qui, lorsque le guide est de type en arête s'étend sur une distance supérieure à la largeur de l'arête.

On a représenté sur la figure 6 la variation d'indice effectif du mode optique TE00 en fonction de la profondeur d'implantation pour deux géométries d'implantation, à savoir celles correspondant aux schémas référencés (c) et (d) sur la figure 5. Cette figure illustre l'impact de la largeur de la zone d'implantation sur la variation d'indice effectif. On constate qu'une implantation selon le schéma référencé (d) sur la figure 5 permet de diminuer la profondeur d'implantation à variation d'indice effectif constant (variation de 0.1 pour 65nm d'implantation contre 85nm dans le cas d'une implantation selon le schéma référencé (c) sur la figure 5).

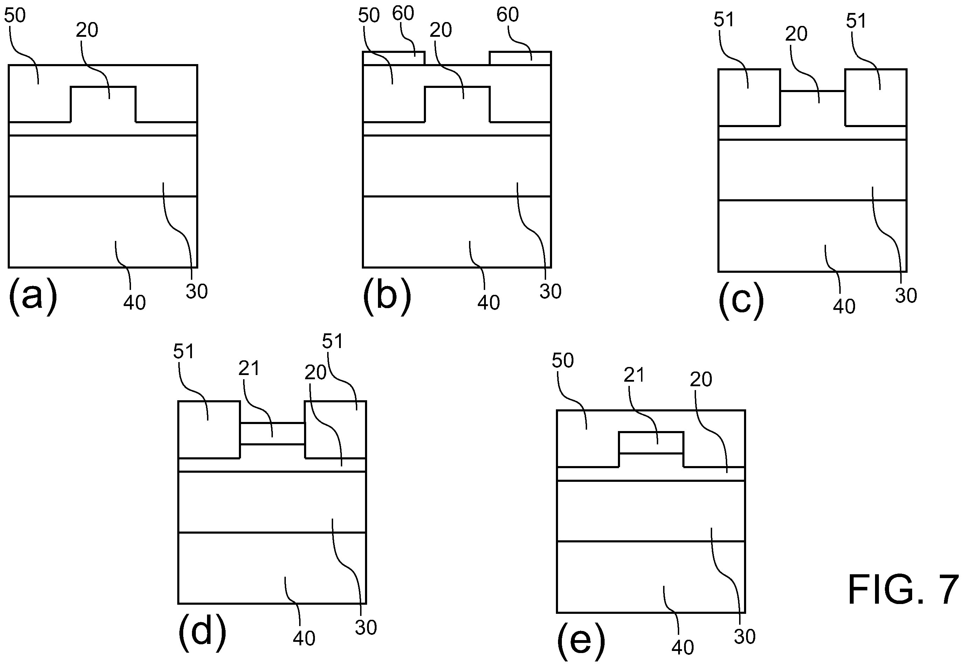

On a représenté sur la figure 7 différentes étapes, réalisées en post-fabrication, de formation d'un guide d'ondes permettant un réajustement des propriétés du circuit photonique intégrant ce guide d'ondes.

A l'issue de sa fabrication, et en référence au schéma (a) de la figure 7, le circuit photonique est encapsulé par une couche d'encapsulation 50 qui est classiquement réalisée en SiO₂. L'invention n'est toutefois limitée à ce matériau, mais s'étend au cas d'une couche d'encapsulation en un matériau au coefficient thermo-optique négatif qui présente l'avantage de contrebalancer la sensibilité thermo-optique du silicium et donc de rendre les guides insensibles aux changements de température. Une telle couche est par exemple réalisée en dioxyde de titane (TiO2).

La formation du guide d'ondes selon l'invention s'effectue par retrait de la couche d'encapsulation au niveau de la zone de la région de propagation de la lumière dont on souhaite modifier l'indice de réfraction, implantation de ladite zone, et encapsulation de la zone implantée. Le retrait de la couche d'encapsulation est typiquement réalisé par lithographie et gravure.

Lorsque la couche d'encapsulation 50 est en SiO₂, elle peut jouer le rôle de masque dur. En référence au schéma (b) de la figure 5, une couche de résine 60 est déposée sur la couche d'encapsulation 50 puis soumise à une lithographie pour définir le motif de la zone de la région de propagation dont on souhaite modifier l'indice de réfraction. En référence au schéma (c), la région exposée du masque dur 50 est soumise à une gravure de manière à exposer la zone à implanter. La couche de résine est ensuite retirée. Puis, en référence au schéma (d), l'implantation ionique est alors réalisée pour former la zone 21 à indice de réfraction modifié. Et en référence au schéma (e), la zone 21 à indice de réfraction modifié est de nouveau encapsulée par une couche de SiO₂.

Lorsque la couche d'encapsulation initiale est en TiO₂, on relèvera qu'une étape de dépôt d'une couche de masque dur, typiquement réalisée en SiO₂, sur la couche d'encapsulation est nécessaire avant de procéder au dépôt de la couche de résine. Et l'étape d'encapsulation de la zone 21 à indice de réfraction modifié peut consister à venir l'encapsuler par du TiO₂ ou par un autre matériau d'encapsulation comme par exemple du SiO₂.

Ainsi, dans un mode de réalisation possible ne faisant pas partie de l'invention, le guide comprend une couche d'encapsulation recouvrant l'ensemble de la région de propagation de la lumière, c'est-à-dire que le matériau encapsulant la zone à indice de réfraction modifié est identique au matériau constituant l'encapsulation initiale du guide d'ondes.

Selon l'invention, le guide d'ondes comprend une couche d'encapsulation recouvrant la région de propagation de la lumière sauf au niveau de l'au moins une zone, une encapsulation de l'au moins une zone étant réalisée en un matériau différent du matériau de la couche d'encapsulation. Un exemple illustratif est celui d'une couche d'encapsulation en TiO2, et une encapsulation de la zone à indice de réfraction modifié en SiO₂.

L'invention peut notamment être mise en oeuvre lorsqu'un ou plusieurs emplacements d'intérêt pour procéder au réajustement des propriétés du circuit sont prédéfinis et incorporés au circuit au cours de sa fabrication. En référence aux figures 1 et 4, le circuit peut ainsi comprendre un ou plusieurs emplacements d'intérêt Z1, Z2 où l'encapsulation est réalisée en un matériau différent de l'encapsulation du reste du circuit. Un emplacement d'intérêt peut être associé à un seul guide comme c'est le cas pour l'interféromètre de Mach-Zehnder représenté sur la figure 1. Il peut également être associé à une pluralité de guides d'ondes comme c'est le cas pour le réseau sélectif planaire (AWG pour *Arrayed Waveguide Grating*) représenté sur la figure 4.

Un emplacement d'intérêt inclut une ou plusieurs zones à implanter et présente une dimension supérieure ou égale à celle de la ou des zones à implanter. Cette dimension peut notamment correspondre à celle d'une électrode de chauffe.

Ces emplacements Z1, Z2 peuvent ainsi être encapsulées en SiO₂, là où le reste du circuit est protégé contre les changements de température par une couche d'encapsulation en TiO₂. Après éventuelle implantation d'une zone au sein d'un de ces emplacements Z1, Z2, la région implantée est ré-encapsulée en SiO₂ de manière à ne pas différer, si ce n'est par la modification de l'indice de réfraction de la région implantée, du circuit dont les caractéristiques spectrales ont été mesurées. Dans un tel cas de figure, les emplacements d'intérêt servant aux réajustements spatio-fréquentiels sont significativement plus petits que la taille totale du circuit afin d'assurer son insensibilité en température (en effet les emplacements d'intérêt encapsulés en SiO2 ne sont pas protégés contre les changements de température).

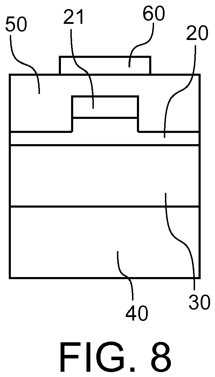

Comme représenté sur la figure 8, il est par ailleurs possible d'agencer une électrode métallique 60 sur l'encapsulation 50 en SiO₂ de la zone implantée 21 qui reste donc sensible aux changements de température. Dans un tel cas de figure, on peut procéder à un premier réajustement de forte amplitude par implantation, suivi d'un second réajustement extrêmement fin par le contrôle de l'électrode de chauffe. Du fait du premier réajustement passif par implantation, le second réajustement actif des erreurs de phases par effet Joule présente une consommation énergétique réduite par comparaison à une situation où il serait utilisé seul.

Ce type d'hybridation des techniques de réajustement est avantageuse dans le cas de signaux WDM (*Wavelength Division Multiplexing* désignant un multiplexage en longueur d'ondes) très dense (DWDM) où les canaux sont très rapprochés et donc très sensibles aux incertitudes de fabrications. Ainsi, les erreurs de fabrications sont corrigées grossièrement par implantation en post-fabrication et finement par effet joule pendant l'utilisation du circuit.

L'invention permet donc de réduire voire d'annuler la consommation énergétique auparavant nécessaire pour procéder aux réajustements spatio-fréquentiels. Elle propose effectivement dans un mode de réalisation un circuit photonique athermique ne nécessitant pas de contrôles actifs pour pallier aux incertitudes de fabrication et aux variations de température, ou à tout le moins uniquement des contrôles minimes.

L'approche de l'invention est en outre versatile en ce sens que les réajustements post-fabrication par implantation restent compatibles avec les méthodes de contrôles actifs utilisés aujourd'hui.

L'invention peut par ailleurs être mise en oeuvre en post-fabrication avec des technologies compatibles CMOS.

Enfin, la stabilité de ce procédé de réajustement en post-fabrication est garantie pour des températures inférieures à la température de recristallisation du silicium, ce qui est le cas puisque l'implantation est réalisée après la fabrication. Au-delà de 550°C, l'effet de l'implantation de type germanium est annulé. Cet effet peut être exploité pour venir, par un chauffage local, diminuer voire annuler l'effet de l'implantation, par exemple si elle a été surestimée.

## Revendications

1. Procédé d'ajustement des propriétés d'un circuit photonique pour les recaler avec des propriétés attendues, le circuit photonique comportant un guide d'ondes (10) qui comprend une région (20) de propagation de la lumière, le procédé comportant une étape de modification de l'indice de réfraction d'au moins une zone (21) de ladite région (20), ladite étape étant mise en oeuvre au moyen d'une implantation ionique dans l'au moins une zone (21), le procédé étant **caractérisé en ce qu'**il comprend, avant l'étape de modification de l'indice de réfraction de l'au moins une zone, une étape de retrait d'une encapsulation (50) de l'au moins une zone, ladite encapsulation (50) étant réalisée en un second matériau d'encapsulation différent d'un premier matériau d'encapsulation qui encapsule le reste de ladite région, et, après l'étape de modification de l'indice de réfraction de l'au moins une zone, une étape d'encapsulation de l'au moins une zone avec ledit second matériau d'encapsulation.

2. Procédé selon la revendication 1, comprenant, avant l'étape de modification de l'indice de réfraction de l'au moins une zone, une étape de détection de propriétés spectrales du circuit photonique et une étape de détermination de conditions d'implantation en fonction de l'écart entre les propriétés spectrales détectées et des propriétés spectrales attendues.

3. Procédé selon l'une des revendications 1 et 2, comprenant, suite à l'étape d'encapsulation de l'au moins une zone, le dépôt d'une électrode métallique sur l'encapsulation de l'au moins une zone.

4. Guide d'ondes (10) pour circuit photonique, comprenant une région (20) de propagation de la lumière qui présente au moins une zone (21) à indice de réfraction modifié par implantation ionique dans laquelle la lumière reste confinée, **caractérisé en ce que** l'au moins une zone (21) est encapsulée par un second matériau d'encapsulation, ledit second matériau d'encapsulation étant différent d'un premier matériau d'encapsulation qui encapsule le reste de ladite région (20).

5. Guide d'ondes (10) selon la revendication 4, dans lequel les espèces ioniques implantées dans l'au moins une zone (21) sont des espèces ioniques du groupe IV, telles que des ions germanium.

6. Guide d'ondes (10) selon l'une des revendications 4 et 5, dans lequel l'au moins une zone s'étend dans la direction de propagation de la lumière sur une longueur (d) supérieure à la moitié de la longueur d'ondes de la lumière.

7. Guide d'ondes (10) selon l'une des revendications 4 à 6, dans lequel la région de propagation de la lumière est du type en arête ou en bande et dans lequel l'au moins une zone (21) est une portion supérieure de l'arête ou de la bande qui s'étend sur une distance déterminée dans la direction de propagation de la lumière.

8. Guide d'ondes (10) selon l'une des revendications 4 à 7, dans lequel l'au moins une zone présente, dans la direction de propagation de la lumière, une section de transition d'entrée (22, 25, 27) dont la taille augmente progressivement, une section centrale (23, 28) de taille constante, et une section de transition de sortie (24, 26, 29) dont la taille diminue progressivement.

9. Guide d'ondes (10) selon l'une des revendications 4 à 8, dans lequel le premier matériau d'encapsulation est un matériau au coefficient thermo-optique négatif.

10. Guide d'ondes (10) selon l'une des revendications 4 à 8, dans lequel le premier matériau d'encapsulation est du TiO₂ et le second matériau d'encapsulation est du SiO₂.

11. Guide d'ondes (10) selon l'une des revendications 9 et 10, comprenant en outre une électrode métallique agencée sur l'encapsulation de l'au moins une zone.

12. Circuit photonique comprenant un guide d'ondes selon l'une quelconque des revendications 5 à 11.

## Patentansprüche

1. Verfahren zur Anpassung der Eigenschaften eines photonischen Schaltkreises, um sie mit erwarteten Eigenschaften abzugleichen, wobei der photonische Schaltkreis einen Wellenleiter (10) umfasst, der eine Region (20) zur Lichtausbreitung umfasst, wobei das Verfahren einen Schritt des Modifizierens des Brechungsindex wenigstens einer Zone (21) der Region (20) umfasst, wobei der Schritt mittels einer lonenimplantation in die wenigstens eine Zone (21) durchgeführt wird, wobei das Verfahren **dadurch gekennzeichnet ist, dass** es vor dem Schritt des Modifizierens des Brechungsindex der wenigstens einen Zone einen Schritt des Entfernens einer Einkapselung (50) der wenigstens einen Zone umfasst, wobei die Einkapselung (50) aus einem zweiten Einkapselungsmaterial realisiert ist, das von einem ersten Einkapselungsmaterial verschieden ist, das den Rest der Region einkapselt, und nach dem Schritt des Modifizierens des Brechungsindex der wenigstens einen Zone einen Schritt des Einkapselns der wenigstens einen Zone mit dem zweiten Einkapselungsmaterial.

2. Verfahren nach Anspruch 1, umfassend vor dem Schritt des Modifizierens des Brechungsindex der wenigstens einen Zone einen Schritt des Detektierens von spektralen Eigenschaften des photonischen Schaltkreises und einen Schritt des Bestimmens von Implantationsbedingungen als Funktion des Abstands zwischen den detektierten spektralen Eigenschaften und erwarteten spektralen Eigenschaften.

3. Verfahren nach einem der Ansprüche 1 und 2, umfassend nach dem Schritt des Einkapselns der wenigstens einen Zone das Aufbringen einer metallischen Elektrode auf die Einkapselung der wenigstens einen Zone.

4. Wellenleiter (10) für einen photonischen Schaltkreis, umfassend eine Region (20) zur Lichtausbreitung, die wenigstens eine Zone (21) mit einem durch lonenimplantation modifizierten Brechungsindex aufweist, in der das Licht eingesperrt bleibt, **dadurch gekennzeichnet, dass** die wenigstens eine Zone (21) durch ein zweites Einkapselungsmaterial eingekapselt ist, wobei das zweite Einkapselungsmaterial von einem ersten Einkapselungsmaterial verschieden ist, das den Rest der Region (20) einkapselt.

5. Wellenleiter (10) nach Anspruch 4, bei dem die Ionensorten, die in die wenigstens eine Zone (21) implantiert sind, lonensorten der Gruppe IV sind, wie zum Beispiel Germanium-Ionen.

6. Wellenleiter (10) nach einem der Ansprüche 4 und 5, bei dem sich die wenigstens eine Zone in der Ausbreitungsrichtung des Lichts über eine Länge (d) erstreckt, die größer als die halbe Wellenlänge des Lichts ist.

7. Wellenleiter (10) nach einem der Ansprüche 4 bis 6, bei dem die Region der Lichtausbreitung vom Typ Grat oder Band ist, und bei dem die wenigstens eine Zone (21) ein oberer Bereich des Grats oder des Bands ist, der sich über einen bestimmten Abstand in der Ausbreitungsrichtung des Lichts erstreckt.

8. Wellenleiter (10) nach einem der Ansprüche 4 bis 7, bei dem die wenigstens eine Zone in der Ausbreitungsrichtung des Lichts einen Eintrittsübergangsquerschnitt (22, 25, 27) aufweist, dessen Größe progressiv zunimmt, einen zentralen Querschnitt (23, 28) von konstanter Größe, und einen Austrittsübergangsquerschnitt (24, 26, 29), dessen Größe progressiv abnimmt.

9. Wellenleiter (10) nach einem der Ansprüche 4 bis 8, bei dem das erste Einkapselungsmaterial ein Material mit einem negativen thermo-optischen Koeffizienten ist.

10. Wellenleiter (10) nach einem der Ansprüche 4 bis 8, bei dem das erste Einkapselungsmaterial TiO₂ ist, und das zweite Einkapselungsmaterial SiO₂ ist.

11. Wellenleiter (10) nach einem der Ansprüche 9 und 10, ferner umfassend eine metallische Elektrode, die auf der Einkapselung der wenigstens einen Zone angeordnet ist.

12. Photonischer Schaltkreis, umfassend einen Wellenleiter nach einem der Ansprüche 5 bis 11.

## Claims

1. Method for adjusting the properties of a photonic circuit such that they fit with expected properties, the photonic circuit including a waveguide (10) which comprises a light propagation region (20), the method including a step of modifying the refractive index of at least one zone (21) of said region (20), said step being implemented by mean of an ion implantation in the at least one zone (21), the method being **characterized in that** it comprises, before the step of modifying the refractive index of the at least one zone, a step of removing an encapsulation (50) of the at least one zone, said encapsulation (50) being made in a second encapsulating material different from a first encapsulating material that covers the remainder of said region, and, after the step of modifying the refractive index of the at least one zone, a step of encapsulating the at least one zone with said second encapsulating material.

2. Method according to claim 1, comprising, before the step of modifying the refractive index of the at least one zone, a step of detecting spectral properties of the photonic circuit and a step of determining implantation conditions as a function of the deviation of the detected spectral properties relative to the expected spectral properties.

3. Method according to one of claims 1 and 2, comprising, following the step of encapsulating the at least one zone, depositing a metal electrode on the encapsulation of the at least one zone.

4. Waveguide (10) for a photonic circuit, comprising a light propagation region (20) which has at least one zone (21) with a refractive index modified by ion implantation in which the light remains confined, **characterised in that** the at least one zone (21) is encapsulated by a second encapsulating material, said second encapsulating material being different from a first encapsulating material that covers the remainder of said region (20).

5. Waveguide (10) according to claim 4, wherein the ion species implanted in the at least one zone (21) are group IV ion species, such as germanium ions.

6. Waveguide (10) according to one of claims 4 and 5, wherein the at least one zone extends in the light propagation direction over a length (d) higher than half the light wavelength.

7. Waveguide (10) according to one of claims 4 to 6, wherein the light propagation region is of the rib or strip type and wherein the at least one zone (21) is an upper portion of the rib or of the strip which extends over a determined distance in the light propagation direction.

8. Waveguide (10) according to one of claims 4 to 7, wherein the at least one zone has, in the light propagation direction, an inlet transition section (22, 25, 27) the size of which gradually increases, a centre section (23, 28) with a constant size, and an outlet transition section (24, 26, 29) the size of which gradually decreases.

9. Waveguide (10) according to one of claims 4 to 8, wherein the first encapsulating material is a material having a negative thermo-optic coefficient.

10. Waveguide (10) according to one of claims 4 to 8, wherein the first encapsulating material is TiO₂ and the second encapsulating material is SiO₂.

11. Waveguide (10) according to one of claims 9 and 10, further comprising a metal electrode arranged on the encapsulation of the at least one zone.

12. A photonic circuit comprising a waveguide according to any of claims 5 to 11.
